# EUROPÄISCHE PATENTSCHRIFT

(11) **EP 2 399 780 B1**
(45) Veröffentlichungstag und Bekanntmachung des Hinweises auf die Patenterteilung: **31.07.2013**
(21) Anmeldenummer: 10167559.3
(22) Anmeldetag: 28.06.2010
(51) Int. Cl.: B60R 1/06

(54) **Außenrückblickspiegel**
External rear view mirror
Rétroviseur extérieur

(43) Veröffentlichungstag der Anmeldung: 28.12.2011
(73) Patentinhaber: SMR Patents S.à.r.l., 1653 Luxembourg (LU)
(72) Erfinder: Schmierer, Arne, 73230 Kirchheim (DE); Negel, Raimund, 72669, Unterensingen (DE); Herrmann, Andreas, 71364, Winnenden-Baach (DE); Szmolenszki, Istvan, 71409, Schwaikheim (DE)
(74) Vertreter: Weber-Bruls, Dorothée

(56) Entgegenhaltungen:
- EP-A2- 1 243 471
- WO-A1-2004/113124
- WO-A2-01/28814
- DE-U1- 8 914 759
- US-B1- 6 347 872
- US-B2- 7 033 033
- US-B2- 7 448 589

## Beschreibung

Die Erfindung betrifft einen Außenrückblickspiegel für ein Kraftfahrzeug gemäß dem Oberbegriff des Anspruchs 1.

Eine Außenrückblickspiegelanordnung für ein Kraftfahrzeug besteht beispielsweise aus einem an dem Kraftfahrzeug angeordneten Spiegelfuß, welcher mittels einer Spiegelfußabdeckung verkleidet sein kann, und einem an dem Spiegelfuß angeordneten Außenrückblickspiegel. Der Spiegelfuß kann beispielsweise als Druckgussteil aus einem den auftretenden Kräften und Momenten widerstehenden Werkstoff hergestellt sein. Der Außenrückblickspiegel umfasst ein Außenrückblickspiegelgehäuse, welches unter anderem einen dem Spiegelfuß zugeordneten Grundträger beherbergt.

Spiegelfuß und Grundträger sind gelenkig miteinander verbunden, so dass der Außenrückblickspiegel gegenüber dem Spiegelfuß aus einer Betriebsstellung in eine Anklappstellung und umgekehrt um eine Gelenkachse verschwenkbar ist. Dabei können Lagermittel zwischen Spiegelfuß und Grundträger vorgesehen sein, um Verschleiß und auftretende Reibungskräfte während des Verschwenkens möglichst gering zu halten.

Der Grundträger ist vorzugsweise ebenfalls als Druckgussteil aus einem den auftretenden Kräften und Momenten widerstehenden Werkstoff hergestellt, beispielsweise aus dem selben Werkstoff wie der Spiegelfuß. Auf dem Grundträger ist eine beispielsweise elektromotorisch betätigbare Verstellanordnung für ein Spiegelglas angeordnet. Die Verstellanordnung wirkt auf eine Trägerplatte ein, auf der das Spiegelglas angeordnet ist. Beispielsweise kann das Spiegelglas mittels einer Klebeverbindung auf der Trägerplatte montiert sein. Die Trägerplatte kann an der Verstellanordnung und/oder an der Grundplatte geführt und/oder gelagert sein. Der Begriff Trägerplatte bezeichnet hierbei einen Träger, der zumindest eine eben oder gewölbt ausgeführte, geschlossene oder gitterförmig unterbrochene, z.B. wabenförmige Trägerfläche aufweist, die geeignet ist, um darauf ein Spiegelglas beispielsweise mittels einer Klebeverbindung oder durch Einklipsen z.B. hinter am Umfang der Trägerfläche hervorstehende und vom Umfang aus gesehen nach innen zur Mitte der Trägerfläche hin kragende Rastmittel zu befestigen.

Das Außenrückblickspiegelgehäuse weist auf seiner in Betriebsstellung der Fahrtrichtung des Kraftfahrzeugs abgewandten Rückseite eine Öffnung auf, durch welche hindurch das Spiegelglas sichtbar ist bzw. in welcher das Spiegelglas angeordnet ist. Um eine Verstellbarkeit des Spiegelglases zu gewährleisten, ist allseitig zwischen Spiegelglas bzw. Trägerplatte und den die Öffnung umgebenden Wandungen des Außenrückblickspiegelgehäuses ein Abstand eingehalten, so dass sich um das Spiegelglas umlaufend ein Spalt zu den die Öffnung umgebenden Wandungen des Außenrückblickspiegelgehäuses ergibt.

Der Außenrückblickspiegel kann darüber hinaus eine Wiederholblinkleuchte, ein beheizbares Spiegelglas, ein elektrochromatisch abblendbares Spiegelglas, ein Erfassungs- und/oder Warnanzeigemodul für eine Fahrassistenzvorrichtung, wie etwa eine Totwinkelüberwachung, eine Spurverlasswarnung, eine Annäherungsüberwachung, oder dergleichen, oder eine Kombination hiervon aufweisen. Alternativ oder zusätzlich kann der Außenrückblickspiegel wenigstens einen Sensor zur Erfassung von Fahr- und/oder Umgebungszuständen, wie beispielsweise Temperatur, Helligkeit, Verschmutzungsgrad, Beleuchtungssituation aufweisen, beispielsweise um das Spiegelglas automatisch zu beheizen und/oder z.B. elektrochromatisch abzublenden.

Beispielsweise um die Montage der verschiedenen, zumindest zum Teil im Inneren des Außenrückblickspiegelgehäuses beherbergten Bauteile, Bauteilgruppen sowie gegebenenfalls deren elektrische Verbindungen untereinander und/oder mit einem kraftfahrzeugseitig untergebrachten Steuergerät zu vereinfachen, kann das Außenrückblickspiegelgehäuse zumindest zweiteilig ausgeführt sein. Ein erstes Gehäuseteil bildet beispielsweise den Gehäuseboden, ein zweites Gehäuseteil beispielsweise den Gehäusedeckel. Eines der beiden Gehäuseteile kann dabei eine um die Öffnung für das Spiegelglas herumliegende Gehäusepartie mit die Öffnung umgebenden Wandungen umfassen.

Ein Ziel bei der Entwicklung und Herstellung von Kraftfahrzeugteilen, wie etwa einer Außenrückblickspiegelanordnung oder einem Außenrückblickspiegel, ist eine einfache, zeitsparende und kostengünstige Herstellung und Montage.

Außenrückblickspiegel mit Montagekonzepten, welche zeitaufwändige Verbindungsmethoden zwischen einzelnen Bauteilen oder Bauteilgruppen vorsehen, stehen diesem Ziel entgegen.

Durch US 7,448,589 B2 ist ein Außenrückblickspiegel eines Kraftfahrzeugs bekannt. Der Außenrückblickspiegel besteht aus einem Grundträger, einem an dem Grundträger befestigten, einteiligen Außenrückblickspiegelgehäuse mit einer rückwärtigen Öffnung, einem in das Außenrückblickspiegelgehäuse durch die Öffnung eingeschobenen Spiegelglas und einer mit dem Grundträger und dem Spiegelglas verbundenen Verstellanordnung. Wenigstens ein Verbindungselement verbindet jeweils den Grundträger und das Außenrückblickspiegelgehäuse und/oder jeweils die Verstellanordnung und den Grundträger. Das Verbindungselement besteht aus einer sich stufenweise einwärts bis zu einem aufgebördelten Kolben hin verjüngenden, gestreckten, ringförmigen Einschnürung und einer kreisrunden Öffnung. Die Einschnürung hat einen kleineren Durchmesser als der Kolben. Der Durchmesser der Öffnung ist kleiner als der Durchmesser des Kolbens und groß genug bemessen, dass die Einschnürung darin verschiebbar gehalten ist. Das Verbindungselement bildet eine Rastverbindung, welche das Außenrückblickspiegelgehäuse bzw. die Verstellanordnung sicher am Grundträger hält.

Ein gattungsgemäßer Außenrückblickspiegel ist aus der EP 1 243 471 A2 bekannt.

Eine Aufgabe der Erfindung ist es, den gestattungsgemäßen Außenrückblickspiegel für ein Kraftfahrzeug derart weiter zu entwickeln, dass er einfache und kostengünstige Herstellung und Montage zulässt und eine Wiederholblinkleuchtfunktion erfüllt.

Die Aufgabe wird gelöst durch die Merkmale des Kennzeichens von Anspruch 1.

Demnach ist ein Außenrückblickspiegel eines Kraftfahrzeugs mit einem zumindest zweiteiligen Außenrückblickspiegelgehäuse vorgesehen. Das Außenrückblickspiegelgehäuse beherbergt wenigstens einen Grundträger, auf dem ein Spiegelglas beispielsweise elektromotorisch verstellbar angeordnet ist. An seiner Rückseite weist das Außenrückblickspiegelgehäuse eine Öffnung für das Spiegelglas auf. Das Außenrückblickspiegelgehäuse besteht wenigstens aus einem ersten Gehäuseteil und einem zweiten Gehäuseteil, welche beide mit dem Grundträger verbunden sind. Eines der beiden Gehäuseteile kann eine um die Öffnung für das Spiegelglas herumliegende Gehäusepartie mit die Öffnung umgebenden Wandungen umfassen. Das erste Gehäuseteil und das zweite Gehäuseteil grenzen entlang mindestens eines Verbindungsstoßes aneinander an.

Der Außenrückblickspiegel sieht Rastverbindungen wenigstens sowohl zwischen den Gehäuseteilen des zumindest zweiteiligen Außenrückblickspiegelgehäuses untereinander, als auch zwischen den Gehäuseteilen des zumindest zweiteiligen Außenrückblickspiegelgehäuses und dem Grundträger vor. Eine auch als Klipsverbindung oder als Schnappverbindungen bezeichenbare Rastverbindung umfasst korrespondierende Rastelemente, von denen wenigstens eines elastisch verformbar ist und bei der Herstellung der Rastverbindung im Anschluss an eine Verformung mit mindestens einem anderen lösbar oder unlösbar verhakt. Beispiele für derart korrespondierende Rastelemente sind ein elastisch verformbares Rastmittel und eine Hintergreifung.

Vorteile der Erfindung ergeben sich unter anderem durch ein einfaches, durch die Rastverbindungen zumindest sowohl zwischen den Gehäuseteilen untereinander, als auch zwischen den Gehäuseteilen und dem Grundträger geschaffenes Montagekonzept für den Außenrückblickspiegel, welches ohne zeitaufwändige Verbindungsmethoden zwischen den Gehäuseteilen und dem Grundträger auskommt. Dadurch wird eine zeitsparende und kostengünstige Herstellung des Außenrückblickspiegels ermöglicht.

Zudem ist gemäß der Erfindung vorgesehen, dass zumindest sämtliche Verbindungsstellen zwischen den Gehäuseteilen des zumindest zweiteiligen Außenrückblickspiegelgehäuses untereinander, als auch zwischen den Gehäuseteilen und dem Grundträger Rastverbindungen umfassen. Eine Verbindungsstelle kennzeichnet sich dabei durch eine lokale Verbindung zwischen verschiedenen Bauteilen aus, über welche lokale Verbindung neben Kräften in wenigstens zwei Richtungen auch Momente um wenigstens zwei Achsen übertragen werden können. Eine Verbindungsstelle wird demnach nicht durch eine bloße Anlagefläche, wie beispielsweise einen Falz oder eine Überlappung am Verbindungsstoß zwischen zwei Gehäuseteilen gebildet, sondern beispielsweise durch einen vollständigen lokalen Formschluss, welcher für sich Relativbewegungen zwischen den Gehäuseteilen untereinander bzw. zwischen den Gehäuseteilen und dem Grundträger verhindert.

Vorzugsweise sind die Verbindungsstellen zwischen den Gehäuseteilen untereinander und der Gehäuseteile mit dem Grundträger ausschließlich durch Rastverbindungen hergestellt.

Alternativ ist möglich, dass zumindest ausgewählte, die Rastverbindungen umfassende Verbindungsstellen zwischen den Gehäuseteilen untereinander und zwischen den Gehäuseteilen und dem Grundträger eine weitere Verbindungsart zusätzlich zu der Rastverbindung aufweisen. Bei der weiteren Verbindungsart kann es sich beispielsweise um eine Schraubverbindung, um eine Nietverbindung, um eine Klebeverbindung, um eine Schweißverbindung etc. handeln, die beispielsweise nach Herstellung der Rastverbindung einfach und mit geringem Aufwand hergestellt werden kann.

Wenigstens eine Rastverbindung kann zumindest eine Anlagefläche aufweisen, sei es beispielsweise in Form einer Fangrippe als Montagehilfe oder als Rastelement oder als Aufnahme für ein Rastmittel, oder als Kombination hiervon. Die Anlagefläche kann mit einem Rastelement oder mit einer anderen Einrichtung der Rastverbindung oder mit einer Partie eines der miteinander zu verbindenden Bauteile beispielsweise selbstausrichtend zusammenwirken. Durch ein selbstausrichtendes Zusammenwirken kann die Montage vereinfacht werden, indem nach einem zur Anlage bringen der korrespondierenden, selbstausrichtenden Anlageflächen die miteinander zu verbindenden Bauteile bis zur Herstellung der Rastverbindung lagerichtig und ausrichtungsgenau zusammengeführt werden können.

Wenigstens an einer Partie des Verbindungsstoßes zwischen den Gehäuseteilen und/oder zwischen einem der Gehäuseteile und dem Grundträger kann an wenigstens einem der beispielsweise über den Verbindungsstoß hinweg benachbarten Bauteile mindestens eine Anlagefläche vorgesehen sein. Die Anlagefläche kann mit einer Fläche des z.B. über den Verbindungsstoß hinweg benachbarten Bauteils korrespondieren. Die Anlagefläche kann als oder an einer hervorstehenden Fangrippe ausgebildet sein. Alternativ oder zusätzlich kann die Anlagefläche an einem Vor- oder Rücksprung ausgebildet sein. Die Anlagefläche kann dazu dienen, die miteinander zu verbindenden Bauteile bereits vor dem Einrasten der Rastverbindung relativ zueinander auszurichten bzw. um die Ausrichtung der beiden Bauteile relativ zueinander bis zum Einrasten der Rastverbindung zu unterstützen und dadurch zu vereinfachen. Die Anlagefläche kann auch als einfacher Vorsprung oder Nase ausgebildet sein, um eine Vorjustierung bei der Montage der Bauteile zu ermöglichen. Der an einem Bauteil angeordneten Anlagefläche kann eine korrespondierende Anlagefläche gleich einem Anschlag am z.B. über den Verbindungsstoß hinweg benachbarten Bauteil gegenüberliegen. Anlagefläche und gegenüberliegendes Bauteil und/oder Anlagefläche und gegenüberliegende Anlagefläche können selbstausrichtend ausgestaltet sein, so dass beim Ineinandergreifen mehrerer beispielsweise entlang eines Verbindungsstoßes angeordneter Anlageflächen die entlang des Verbindungsstoßes angrenzenden Bauteile selbstausrichtend und/oder gegebenenfalls selbstzentrierend bis zum Einrasten der Rastverbindungen zwischen ihnen zusammengeführt werden können.

Der erfindungsgemäße Außenrückblickspiegel weist eine Wiederholblinkleuchte auf Hierzu ist ein Wiederholblinkleuchtenmodul zumindest teilweise in das Außenrückblickspiegelgehäuse untergebracht. Das Wiederholblinkleuchtenmodul weist wenigstens eine Partie auf, welche zumindest eine zur Erfüllung einer Wiederholblinklichtfunktion vorgesehene Lichtaustrittsfläche umfasst. Das Außenrückblickspiegelgehäuse kann mindestens eine der zumindest einen Lichtaustrittsfläche zugeordnete Ausnehmung aufweisen, welche von der Lichtaustrittsfläche vorzugsweise vollständig eingenommen wird. Die Ausnehmung kann zumindest zum Teil als Öffnung ausgeführt sein.

Vorzugsweise erstreckt sich die mindestens eine die wenigstens eine zur Erfüllung der Wiederholblinklichtfunktion vorgesehene Lichtaustrittsfläche umfassende Partie des Wiederholblinkleuchtenmoduls zumindest zwischen dem ersten Gehäuseteil und dem zweiten Gehäuseteil des Außenrückblickspiegelgehäuses. Die mindestens eine Partie grenzt hierbei entlang jeweils eines Abschnitts an beide der zumindest zwei Gehäuseteile an. Zumindest grenzt die Partie entlang wenigstens eines ersten Abschnitts an das erste Gehäuseteil und entlang wenigstens eines zweiten Abschnitts an das zweite Gehäuseteil an. Entlang dieser Abschnitte ist denkbar, dass die Gehäuseteile nicht direkt miteinander verbunden sind. Um die beiden Gehäuseteile dennoch über das Wiederholblinkleuchtenmodul hinweg miteinander zu verbinden, ist zumindest entlang des ersten Abschnitts zwischen Wiederholblinkleuchtenmodul und erstem Gehäuseteil wenigstens eine erste Verbindungsstelle mit mindestens einer ersten Verbindungsart und zumindest entlang des zweiten Abschnitts zwischen Wiederholblinkleuchtenmodul und zweitem Gehäuseteil wenigstens eine zweite Verbindungsstelle mit mindestens einer zweiten Verbindungsart vorgesehen, von denen zumindest eine Verbindungsart eine Rastverbindung umfasst. Das Wiederholblinkleuchtenmodul kann mit einem ersten Gehäuseteil der beiden Gehäuseteile des Außenrückblickspiegelgehäuses durch eine lösbare oder unlösbare Rastverbindung, durch eine Schraubverbindung oder durch eine Kombination hiervon verbunden sein. Ein zweites Gehäuseteil kann entlang des an das Wiederholblinkleuchtenmodul angrenzenden Abschnitts mittels wenigstens einer Rastverbindung mit dem Wiederholblinkleuchtenmodul verbunden sein.

Alternativ oder zusätzlich können die beiden Gehäuseteile entlang der Abschnitte über das Wiederholblinkleuchtenmodul hinweg miteinander verbunden sein.

Das Wiederholblinkleuchtenmodul kann alternativ nur an ein Gehäuseteil angrenzen, beispielsweise indem in einem der Gehäuseteile eine beispielsweise eine zum Teil als Öffnung ausgeführte Ausnehmung für eine Lichtaustrittsfläche des Wiederholblinkleuchtenmoduls vorgesehen ist.

Das Außenrückspiegelgehäuse kann zusätzlich zu dem Wiederholblinkleuchtenmodul ein Modul und/oder einen Sensor einer Fahrassistenzvorrichtung und/oder ein Modul und/oder einen Sensor zur Steuerung einer Fahrzeugfunktion, wie beispielsweise zur Steuerung einer Beheizung und/oder automatischen Abblendung des Spiegelglases beherbergen. Bei dem Modul und/oder Sensor für eine Fahrassistenzvorrichtung kann es sich beispielsweise um ein Anzeigemodul einer Totwinkelüberwachung, eine Spurverlasswarnung oder einer Annäherungsüberwachung, einen Empfänger zur satellitengestützten Positionsbestimmung oder dergleichen, oder eine Kombination hiervon handeln. Bei dem Modul und/oder dem Sensor zur Steuerung einer Fahrzeugfunktion kann es sich beispielsweise um einen Temperatursensor und/oder einen Helligkeitssensor handeln. Das jeweilige Modul bzw. der jeweilige Sensor können in eine in einem der beiden Gehäuseteile angeordneten Aufnahme eingeschoben und mittels einer Rastverbindung in der Aufnahme verrastet sein.

Wichtig ist hervorzuheben, dass die Ausdrücke erstes und zweites Gehäuseteil sowie allgemein die Begriffe erste, zweite keine Reihenfolge oder konkrete Anleitung zur Anordnung bezeichnen, sondern lediglich einer Unterscheidung dienen und beliebig austauschbar sind.

Weitere Merkmale der Erfindung ergeben sich aus den Ansprüchen, der Beschreibung und den Zeichnungen.

Ausführungsbeispiele der Erfindung sind nachfolgend anhand der Zeichnung näher erläutert. Darin bezeichnen gleiche Bezugszeichen gleiche oder gleich wirkende Elemente. Es zeigen in schematischer Darstellung:
Fig. 1 eine Seitenansicht eines Außenrückblickspiegels mit einem zumindest zweiteiligen Außenrückblickspiegelgehäuse.
Fig. 2 : eine Detailansicht einer Rastverbindung zwischen einem ersten Gehäuseteil eines Außenrückblickspiegelgehäuses und einem darin beherbergten Grundträger eines Außenrückblickspiegels in perspektivischer Ansicht.
Fig. 3 : eine Detailansicht einer Rastverbindung zwischen einem zweiten Gehäuseteil eines Außenrückblickspiegelgehäuses und einem darin beherbergten Grundträger eines Außenrückblickspiegels in einer Draufsicht.
Fig. 4 : eine Detailansicht eines ersten Gehäuseteils eines Außenrückblickspiegelgehäuses und einem darin beherbergten Grundträger eines Außenrückblickspiegels in perspektivischer Ansicht, wobei das erste Gehäuseteil mit einer Fangrippe zur Anlage des Grundträgers ausgestattet ist.
Fig. 5 : eine teilweise geschnittene Ansicht eines Außenrückblickspiegels mit einem zumindest zweiteiligen Außenrückblickspiegelgehäuse und einem zumindest zum Teil darin beherbergten Wiederholblinkleuchtenmodul.
Fig. 6 : eine Detailansicht einer Anordnung einer eine Lichtaustrittsfläche umfassenden Partie eines Wiederholblinkleuchtenmoduls zwischen einem ersten und einem zweiten Gehäuseteil eines zumindest zweiteiligen Außenrückblickspiegelgehäuses eines Außenrückblickspiegels.
Fig. 7 : eine teilweise geschnittene Ansicht eines Außenrückblickspiegels mit einem zumindest zweiteiligen Außenrückblickspiegelgehäuse und einem zumindest zum Teil darin beherbergten Anzeigemodul.

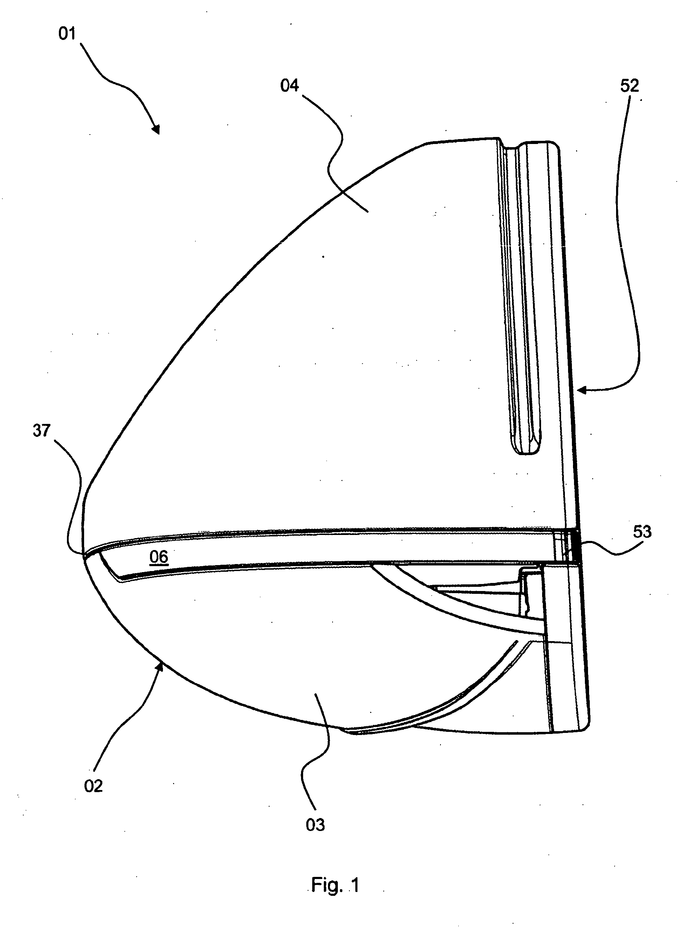

Ein in den Fig. 1 bis 7 ganz oder zum Teil dargestellter Außenrückblickspiegel 01 für ein Kraftfahrzeug weist ein zumindest zweiteiliges

Außenrückblickspiegelgehäuse 02 auf. Das Außenrückblickspiegelgehäuse 02 weist auf seiner in Fig. 1 rechts normal zur Zeichenebene verlaufenden Rückseite 52 eine Öffnung für ein Spiegelglas auf. Das Außenrückblickspiegelgehäuse 02 besteht wenigstens aus einem ersten Gehäuseteil 03 und einem zweiten Gehäuseteil 04. Das erste Gehäuseteil 03 bildet oder umfasst einen Gehäuseboden, wohingegen das zweite Gehäuseteil 04 einen Gehäusedeckel bildet oder umfasst. Eines der beiden Gehäuseteile 03, 04 kann dabei eine um die Öffnung für das Spiegelglas herumliegende Gehäusepartie mit die Öffnung umgebenden Wandungen umfassen.

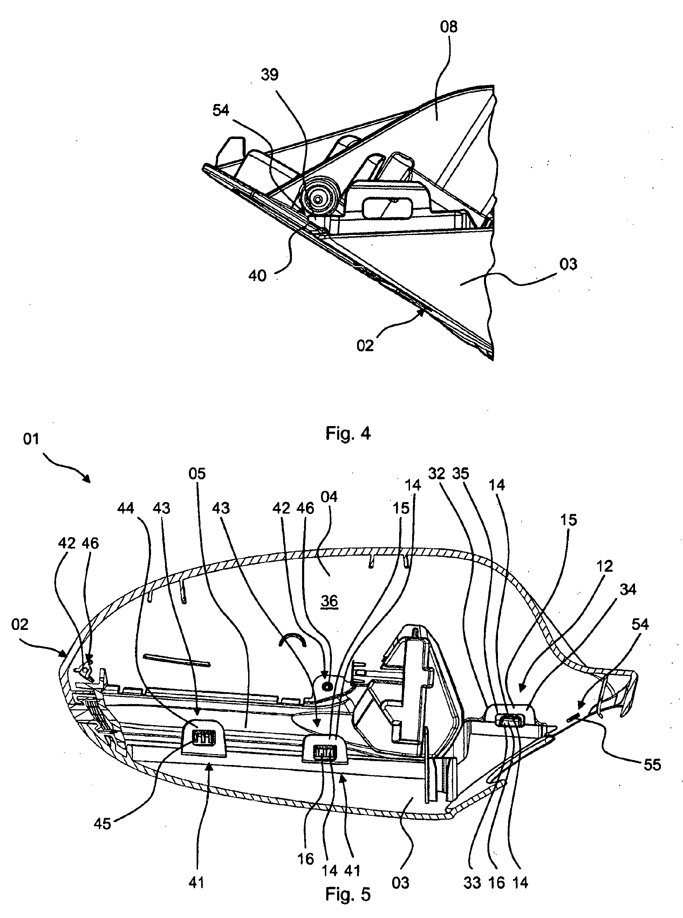

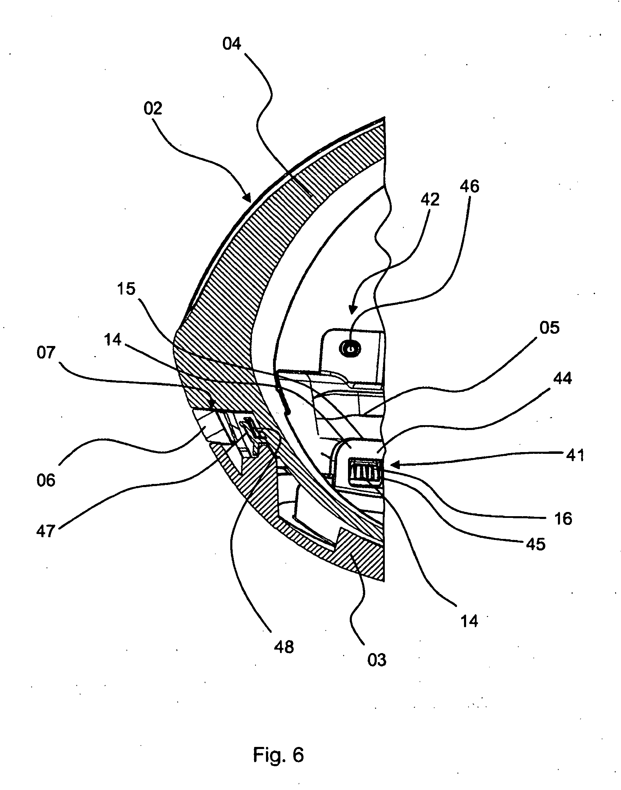

Der in Fig. 1 dargestellte Außenrückblickspiegel 01 kann darüber hinaus ein zumindest zum Teil in dem Außenrückblickspiegelgehäuse 02 untergebrachtes Wiederholblinkleuchtenmodul 05 aufweisen (Fig. 5; Fig. 6). Das Wiederholblinkleuchtenmodul 05 verfügt über zumindest eine zur Erfüllung einer Wiederholblinklichtfunktion vorgesehene Lichtaustrittsfläche 06. Um die Lichtaustrittsfläche 06 nach außen hin sichtbar beispielsweise bündig im Außenrückblickspiegelgehäuse 02 unterzubringen kann das Außenrückblickspiegelgehäuse 02 mindestens eine der zumindest einen Lichtaustrittsfläche 06 zugeordnete Ausnehmung 07 aufweisen. Die Ausnehmung 07 korrespondiert dabei bevorzugt derart mit der Kontur der Lichtaustrittsfläche 06, dass zumindest in einer Außenansicht des Außenrückblickspiegels 01 die Ausnehmung 07 vollständig von der Lichtaustrittsfläche 06 eingenommen ist.

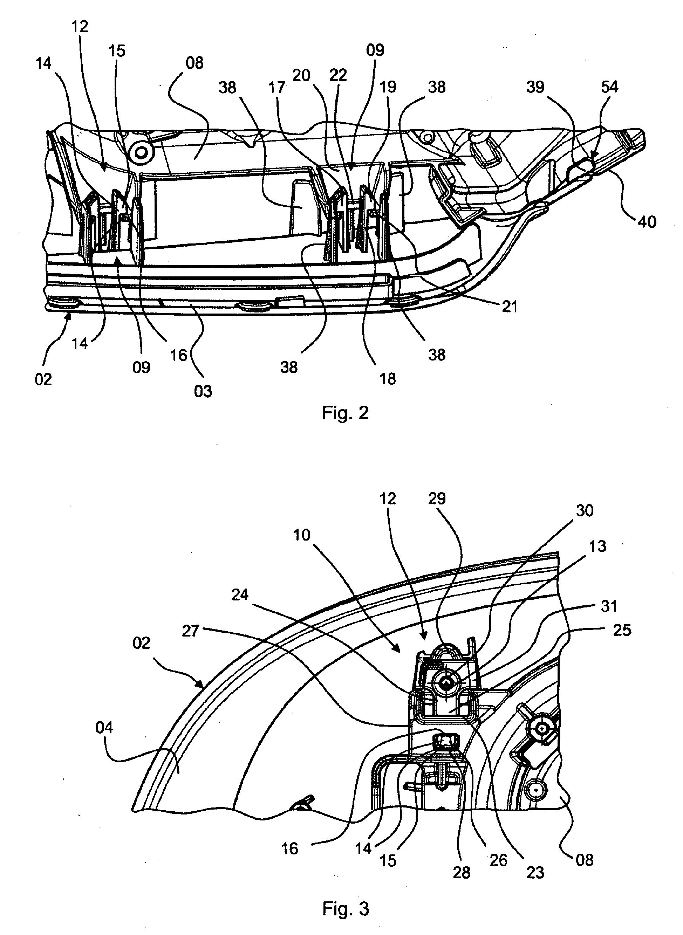

Das Außenrückblickspiegelgehäuse 02 beherbergt wenigstens einen Grundträger 08 (Fig. 2; Fig. 3; Fig. 4), auf dem das Spiegelglas verstellbar angeordnet ist. Eine Besonderheit des Außenrückblickspiegels 01 ist dabei, dass sowohl wenigstens das erste Gehäuseteil 03 und das zweite Gehäuseteil 04 untereinander, als auch das erste Gehäuseteil 03 und der Grundträger 08 sowie das zweite Gehäuseteil 04 und der Grundträger 08 jeweils mittels Rastverbindungen 09, 10, 11 miteinander verbunden sind.

Dabei umfassen bevorzugt sämtliche Verbindungsstellen 12 zwischen dem ersten Gehäuseteil 03 und dem zweiten Gehäuseteil 04 untereinander mindestens eine Rastverbindung 11, als auch sämtliche Verbindungsstellen 12 zwischen dem ersten Gehäuseteil 03 und dem Grundträger 08 jeweils mindestens eine Rastverbindung 09, sowie sämtliche Verbindungsstellen 12 zwischen dem zweiten Gehäuseteil 04 und dem Grundträger 08 jeweils mindestens eine Rastverbindung 10.

Neben den genannten Rastverbindungen 09, 10, 11 an den Verbindungsstellen 12 zwischen dem ersten Gehäuseteil 03 und dem zweiten Gehäuseteil 04, zwischen dem ersten Gehäuseteil 03 und dem Grundträger 08, sowie zwischen dem zweiten Gehäuseteil 04 und dem Grundträger 08 können auch noch Rastverbindungen an Verbindungsstellen zwischen anderen Bauteilen und/oder Bauteilgruppen des Außenrückblickspiegels 01 und/oder dessen Außenrückblickspiegelgehäuses 02 vorgesehen sein.

Zumindest eine Verbindungsstelle 12 zwischen dem ersten Gehäuseteil 03 und dem zweiten Gehäuseteil 04 oder zwischen dem ersten Gehäuseteil 03 und dem Grundträger 08 oder zwischen dem zweiten Gehäuseteil 04 und dem Grundträger 08 kann ausschließlich durch mindestens eine Rastverbindung 09, 11 hergestellt sein (Fig. 2; Fig. 5).

Darüber hinaus kann zumindest eine ausgewählte Verbindungsstelle 12 zwischen dem ersten Gehäuseteil 03 und dem zweiten Gehäuseteil 04 oder zwischen dem ersten Gehäuseteil 03 und dem Grundträger 08 oder zwischen dem zweiten Gehäuseteil 04 und dem Grundträger 08 eine weitere Verbindungsart zusätzlich zu der Rastverbindung 10 aufweisen (Fig. 3). Bei der weiteren Verbindungsart handelt es sich beispielsweise um eine vereinfacht nur durch ein Schraubloch 13 zur Aufnahme beispielsweise einer z.B. Feingewinde- oder Blechschraube dargestellte Schraubverbindung, welche der Einfachheit halber vorzugsweise erst nach der Rastverbindung 10 hergestellt wird.

Die Rastverbindungen 09, 10, 11 können auf unterschiedliche Art und Weise ausgestaltet sein. Den auch als Klipsverbindungen oder als Schnappverbindungen bezeichenbaren Rastverbindungen 09, 10, 11 gemein sind korrespondierende Rastelemente 14, von denen wenigstens eines elastisch verformbar ist und bei der Herstellung der Rastverbindung 09, 10, 11 im Anschluss an eine Verformung mit mindestens einem anderen lösbar oder unlösbar verhakt. Beispiele für derart korrespondierende Rastelemente 14 sind ein elastisch verformbares Rastmittel 15 und eine Hintergreifung 16.

Die als Rastmittel 15 ausgestalteten Rastelemente 14 sind bei der in Fig. 2 dargestellten Rastverbindung 09 in Form von Rücken an Rücken stehenden Rastnasen 17 ausgebildet, welche am ersten Gehäuseteil 03 angeordnet sind. Diese Rastnasen 17 bestehen jeweils aus einer biegeelastischen Rastfeder 18 und einem am freien Ende der Rastfeder 18 einseitig vorstehendem Rastvorsprung 19. Die dem Rastvorsprung 19 abgewandte Seite der Rastfeder 18 bildet den Rücken der Rastnase 17. Die als Hintergreifung 16 ausgestalteten Rastelemente 14 sind bei der Rastverbindung 09 als eine am Grundträger 08 angeordnete Aufnahme 20 mit einem einen Rücksprung 21 bildenden Rand 22 ausgebildet. Der Rücksprung 21 des Randes 22 bildet dabei die Hintergreifung 16 für die an den Rastfedern 18 angeordneten Rastvorsprünge 19.

Bei der in Fig. 3 dargestellten Rastverbindung 10 zwischen dem zweiten Gehäuseteil 04 und dem Grundträger 08 ist an dem Grundträger 08 ein Aufnahmefenster 23 für eine am zweiten Gehäuseteil 04 angeordnete Rastnase 24 angeordnet. Die Rastnase 24 bestehend aus biegeelastischer Rastfeder 25 und an deren freiem Ende angeordnetem Rastvorsprung 26 bildet ein als Rastmittel 15 ausgestaltetes Rastelement 14 der Rastverbindung 10. Das Aufnahmefenster 23 wird von einem Rahmen 27 umgeben, der eine Rastausnehmung 28 für den Rastvorsprung 26 aufweist. Die Rastausnehmung 28 bildet ein als Hintergreifung 16 ausgestaltetes Rastelement 14 der Rastverbindung 10. An dem Rahmen 27 des Aufnahmefensters 23 ist ein Fortsatz 29 angeordnet, welcher mit dem Schraubloch 13 der Schraubverbindung versehen sein kann. Eine in ihrem Innendurchmesser mit dem Außendurchmesser einer in das Schraubloch 13 einschraubbaren Schraube korrespondierende Schrauböffnung 30 ist in einem an dem zweiten Gehäuseteil 04 angeordneten Bügel 31 vorgesehen. An dem Bügel 31 ist die Rastnase 24 angeordnet. In zusammengebautem Zustand von Grundträger 08 und zweitem Gehäuseteil 04 übergreift der Bügel 31 den Fortsatz 29 bei hergestellter Rastverbindung 10. Der Bügel 31 umgrenzt hierbei eine Einschuböffnung für den Fortsatz 29. Ein Einsetzen einer Schraube in die Schrauböffnung 30 und das Einschrauben in das Schraubloch 13 ist somit erst nach Herstellung der Rastverbindung 10 möglich und kann beispielsweise einer zusätzlichen Sicherung der die Rastverbindung 10 umfassenden Verbindungsstelle 12 dienen.

Die Rastelemente 14 der in Fig. 5 dargestellten Rastverbindung 11 zwischen dem ersten Gehäuseteil 03 und dem zweiten Gehäuseteil 04 des Außenrückblickspiegelgehäuses 02 des Außenrückblickspiegels 01 umfassen ein als Rastfenster 32 ausgebildetes Rastmittel 15 und eine als Rastvorsprung 33 ausgebildete Hintergreifung 16. Das Rastfenster 32 ist dabei am ersten Gehäuseteil 03 angeordnet und der Rastvorsprung 33 am zweiten Gehäuseteil 04. Das Rastfenster 32 besteht aus einem biegeelastischen Rahmen 34, welcher eine Rastöffnung 35 für den Rastvorsprung 33 umgibt.

Wenigstens eine zwischen dem ersten Gehäuseteil 03 und dem zweiten Gehäuseteil 04 oder zwischen dem ersten Gehäuseteil 03 und dem Grundträger 08 oder zwischen dem zweiten Gehäuseteil 04 und dem Grundträger 08 wirkende Rastverbindung 09, 10, 11 kann zumindest eine die miteinander zu verbindenden Bauteile oder Bauteilgruppen relativ zueinander ausrichtende Anlagefläche aufweisen.

Bei der Anlagefläche kann es sich beispielsweise bei der Rastverbindung 11 (Fig. 5) um den Rahmen 34 des Rastfensters 32 handeln, der im Innenraum 3 6 des Außenrückblickspiegelgehäuses 02 über einen Verbindungsstoß 37 zwischen erstem Gehäuseteil 03 und zweitem Gehäuseteil 04 hinweg reicht und eine an den Verbindungsstoß 37 angrenzende Kante des zweiten Gehäuseteils 04 bis zum Einrasten der Rastverbindung 11 führt.

Bei der Rastverbindung 09 (Fig. 2) ist die Anlagefläche beispielsweise durch am ersten Gehäuseteil 03 angeordnete Fangrippen 38 gebildet, welche konisch aufeinander zulaufend ausgestaltet sind, um bei der Montage die Aufnahme 20 des Grundträgers 08 bis zum Einrasten der Rastverbindung 09 selbstausrichtend und selbstzentrierend den Rücken an Rücken stehenden Rastnasen 17 zuzuführen.

Bei der Rastverbindung 10 (Fig. 3) ist die Anlagefläche durch den Bügel 31 gebildet, welcher die Einschuböffnung für den Fortsatz 29 umgrenzt. Während der Montage richtet der Bügel 31 beim Einschieben des Fortsatzes 29 in die Einschuböffnung das zweite Gehäuseteil 04 gegenüber dem Grundträger 08 bis zum Einrasten der Rastverbindung 10 aus.

Alternativ oder zusätzlich kann am ersten Gehäuseteil 03 und/oder am zweiten Gehäuseteil 04 und/oder am Grundträger wenigstens eine Anlagefläche 54 vorgesehen sein, um die Bauteile und/oder Bauteilgruppen während der Montage zueinander auszurichten. Die Anlagefläche 54 wirkt mit einem benachbarten Gehäuseteil 03, 04 oder dem Grundträger 08 zusammen. Die Anlagefläche 54 kann z.B. durch in den Fig. 2 und 4 dargestellte, am ersten Gehäuseteil 03 angeordnete Fangrippen 39 gebildet sein, welche mit am Grundträger 08 angeordneten Vorsprüngen 40 zusammenwirken. Die Anlagefläche 54 kann alternativ oder zusätzlich am zweiten Gehäuseteil 04 vorgesehene Vorsprünge 55 umfassen (Fig. 5). Die aus dem Zusammenwirken von Fangrippen 39 und Vorsprüngen 40 erfolgende Ausrichtung von Grundträger 08 und erstem Gehäuseteil 03 mit Hilfe der Anlagefläche 54 vereinfachen die Herstellung der Rastverbindung 09 zwischen erstem Gehäuseteil 03 und Grundträger 08 durch eine Vorjustierung unter gleichzeitiger Sicherstellung einer erwünschten bzw. erforderlichen genauen Ausrichtung und präzisen Positionierung von Grundträger 08 und erstem Gehäuseteil 03 relativ zueinander.

Beispielsweise bildet die durch die Fangrippen 39 und Vorsprünge 40 gebildete Anlagefläche 54 zwischen dem ersten Gehäuseteil 03 und dem Grundträger 08 vereinfacht betrachtet ein Scharnier, um welches das erste Gehäuseteil 03 und der Grundträger 08 unter gleichzeitiger Zusammenführung der Rastverbindung 09 zwischen erstem Gehäuseteil 03 und Grundträger 08 aufeinander geklappt werden können. Der ebenfalls eine Anlagefläche 54 bildende Vorsprung 55 stützt das zweite Gehäuseteil 04 am Grundkörper 08 ab, und stellt so eine präzise Ausrichtung von Grundträger 08 und zweitem Gehäuseteil 04 relativ zueinander sicher.

Wenigstens eine zumindest durch die Lichtaustrittsfläche 06 gebildete Partie des Wiederholblinkleuchtenmoduls 05 erstreckt sich zumindest zwischen dem ersten Gehäuseteil 03 und dem zweiten Gehäuseteil 04 des Außenrückblickspiegelgehäuses 02. Zwischen Wiederholblinkleuchtenmodul 05 und erstem Gehäuseteil 03 befindet sich wenigstens eine erste Verbindungsstelle 41 mit mindestens einer ersten Verbindungsart. Zwischen Wiederholblinkleuchtenmodul 05 und zweitem Gehäuseteil 04 befindet wenigstens eine zweite Verbindungsstelle 42 mit mindestens einer zweiten Verbindungsart. Von den Verbindungsarten umfasst zumindest eine Verbindungsart eine Rastverbindung 43.

Beispielsweise ist das Wiederholblinkleuchtenmodul 05 zumindest mit dem ersten Gehäuseteil 03 mittels einer Rastverbindung 43 verbunden. Die Rastverbindung 43 bildet die erste Verbindungsart. Die Rastverbindung 43 kann ähnlich der Rastverbindung 11 zwischen erstem Gehäuseteil 03 und zweitem Gehäuseteil 04 ausgebildet sein. Als korrespondierende Rastelemente 14 umfasst die Rastverbindung 43 beispielsweise ein Rastfenster 44 als Rastmittel 15 und einen Rastvorsprung 45 als Hintergreifung 16.

Bei der zweiten Verbindungsart kann es sich beispielsweise um eine vereinfacht durch Schraublöcher 46 dargestellte Schraubverbindung handeln.

Auch zur Ausrichtung beispielsweise der Lichtaustrittsfläche 06 des Wiederholblinkleuchtenmoduls 05 gegenüber z.B. dem mittels Schraubverbindung mit dem Wiederholblinkleuchtenmodul 05 zu verbindenden zweiten Gehäuseteil 04 können korrespondierende Aufnahmen 47 und Fangrippen 48 vorgesehen sein. Dabei ist vorzugsweise die Aufnahme 47 wie in Fig. 6 dargestellt am Grund der Ausnehmung 07 am zweiten Gehäuseteil 04 angeordnet und eine Fangrippe 48 am Wiederholblinkleuchtenmodul 05 vorgesehen. Durch die korrespondierende Formgebung erlaubt die Ausnehmung 47 ein Einhaken der Fangrippe 48 unter anschließendem Anklappen des Wiederholblinkleuchtenmoduls 05 an das zweite Gehäuseteil 04 von innen, wobei gleichzeitig die zweiten Verbindungsstellen 42 exakt ausgerichtet werden und das zur Erfüllung der gesetzlichen Vorschriften zur Rückseite 52 hinten abstrahlende Ende 53 der Lichtaustrittsfläche 06 positionsgenau am zweiten Gehäuseteil 04 festgelegt wird (Fig. 1).

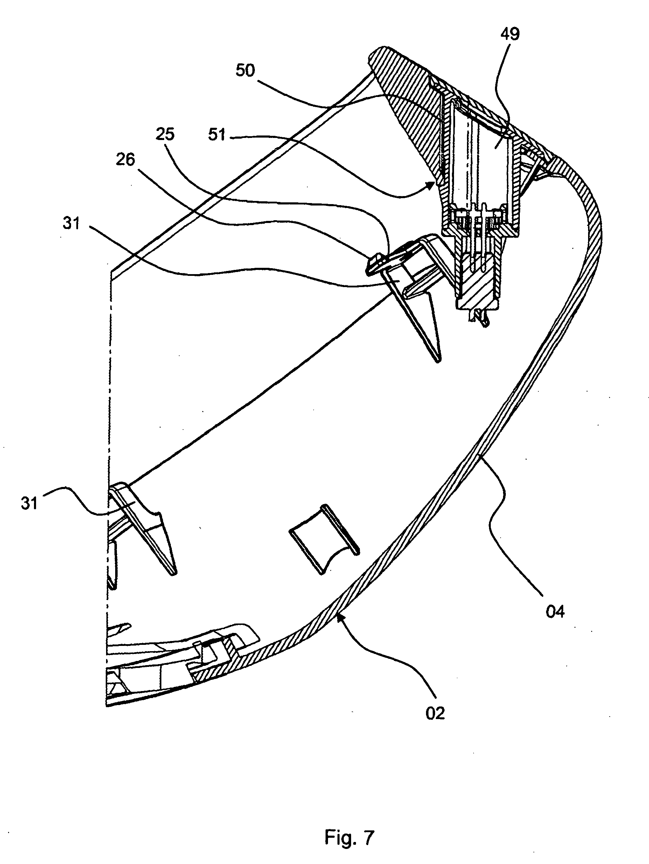

Das Außenrückspiegelgehäuse 02 kann alternativ oder zusätzlich zu dem Wiederholblinkleuchtenmodul 05 ein Modul 49 einer Fahrassistenzvorrichtung beherbergen (Fig. 7). Bei dem Modul 49 für eine Fahrassistenzvorrichtung kann es sich beispielsweise um ein Anzeigemodul einer Totwinkelüberwachung handeln, um ein so genanntes Alert-Modul. Das Modul 49 kann in eine in dem zweiten Gehäuseteil 04 angeordnete Aufnahme 50 eingeschoben und mittels einer Rastverbindung 51 in der Aufnahme 50 verrastet sein.

Die Erfindung ist insbesondere im Bereich der Herstellung von Außenrückblickspiegeln und Außenrückblickspiegelanordnungen für Kraftfahrzeuge gewerblich anwendbar.

### Bezugszeichenliste

| | | | |
|---|---|---|---|
| 01 | Außenrückblickspiegel | 29 | Fortsatz |
| 02 | Außenrückblickspiegelgehäuse | 30 | Schrauböffnung |
| 03 | erstes Gehäuseteil | 31 | Bügel |
| 04 | zweites Gehäuseteil | 32 | Rastfenster |
| 05 | Wiederholblinkleuchtenrnodul | 33 | Rastvorsprung |
| 06 | Lichtaustrittsfläche | 34 | Rahmen |
| 07 | Ausnehmung | 35 | Rastöffnung |
| 08 | Grundträger | 36 | Innenraum |
| 09 | Rastverbindung | 37 | Verbindungsstoß |
| 10 | Rastverbindung | 38 | Fangrippe |
| 11 | Rastverbindung | 39 | Fangrippe |
| 12 | Verbindungsstelle | 40 | Vorsprung |
| 13 | Schraubloch | 41 | Verbindungsstelle |
| 14 | Rastelement | 42 | Verbindungsstelle |
| 15 | Rastmittel | 43 | Rastverbindung |
| 16 | Hintergreifung | 44 | Rastfenster |
| 17 | Rastnase | 45 | Rastvorsprung |
| 18 | Rastfeder | 46 | Schraubloch |
| 19 | Rastvorsprung | 47 | Aufnahme |
| 20 | Aufnahme | 48 | Fangrippe |
| 21 | Rücksprung | 49 | Modul |
| 22 | Rand | 50 | Aufnahme |
| 23 | Aufnahrnefenster | 51 | Rastverbindung |
| 24 | Rastnase | 52 | Rückseite |
| 25 | Rastfeder | 53 | Ende |
| 26 | Rastvorsprung | 54 | Anlagefläche |
| 27 | Rahmen | 55 | Vorsprung |
| 28 | Rastausnehmung | | |

## Patentansprüche

1. Außenrückblickspiegel (01) für ein Kraftfahrzeug mit einem zumindest zweiteiligen Außenrückblickspiegelgehäuse (02), welches eine Öffnung für ein Spiegelglas aufweist und wenigstens einen Grundträger (08) beherbergt, wobei das Außenrückblickspiegelgehäuse (02) wenigstens aus einem ersten Gehäuseteil (03) und einem zweiten Gehäuseteil (04) besteht, welche sowohl untereinander, als auch jeweils mit dem Grundträger (08) verbunden sind, wobei
Rastverbindungen (09, 10, 11) wenigstens sowohl zwischen dem ersten Gehäuseteil (03) und dem zweiten Gehäuseteil (04) untereinander, als auch jeweils zwischen den Gehäuseteilen (03, 04) und dem Grundträger (08) bereitgestellt sind, und zwar zumindest sämtliche Verbindungsstellen (12) zwischen den Gehäuseteilen (03, 04) untereinander, als auch zwischen den Gehäuseteilen (03, 04) und dem Grundträger (08) jeweils mindestens eine Rastverbindung (09, 10, 11) umfassen, **dadurch gekennzeichnet, dass**
die beiden Gehäuseteile (03, 04) über ein Wiederholblinkleuchtenmodul (05) hinweg miteinander verbunden sind, das zumindest teilweise in dem Außenrückblickspiegelgehäuse (02) mit zumindest einer zur Erfüllung einer Wiederholblinklichtfunktion vorgesehenen, mindestens eine Lichtaustrittsfläche (06) umfassenden Partie untergebracht ist, und auf dem Grundkörper (8) das Spiegelglas verstellbar angeordnet ist.

2. Außenrückblickspiegel nach Anspruch 1, **dadurch gekennzeichnet, dass** zumindest eine Verbindungsstelle (12) zwischen den Gehäuseteilen (03, 04) untereinander und/oder zwischen den Gehäuseteilen (03, 04) und dem Grundträger (08) ausschließlich durch mindestens eine Rastverbindung (09, 10, 11) hergestellt ist.

3. Außenrückblickspiegel nach Anspruch 1, oder 2, **dadurch gekennzeichnet, dass** zumindest eine ausgewählte Verbindungsstelle (12) zwischen den Gehäuseteilen (03, 04) untereinander und/oder zwischen den Gehäuseteilen (03, 04) und dem Grundträger (08) eine weitere Verbindungsart (13) zusätzlich zu der Rastverbindung (09, 10, 11) aufweist.

4. Außenrückblickspiegel nach einem der vorhergehenden Ansprüche, **dadurch gekennzeichnet, dass**
wenigstens eine zwischen den Gehäuseteilen (03, 04) und/oder einem Gehäuseteil (03, 04) und dem Grundträger (08) wirkende Rastverbindung (09, 10, 11) zumindest eine die miteinander zu verbindende Gehäuseteile (03, 04) und/oder das Gehäuseteil (03, 04) und den Grundträger (08) zueinander ausrichtende Anlagefläche (20, 38; 29, 31; 32, 34) aufweist.

5. Außenrückblickspiegel nach einem der vorhergehenden Ansprüche, **dadurch gekennzeichnet, dass**
wenigstens ein Gehäuseteil (03, 04) und/oder der Grundträger (08) zumindest eine die miteinander zu verbindende Gehäuseteile (03, 04) und/oder ein Gehäuseteil (03, 04) und den Grundträger (08) zueinander ausrichtende, mit einem benachbarten Gehäuseteil (04, 03) oder dem Grundträger (08) zusammenwirkende Anlagefläche (54, 39, 40, 55) aufweist.

6. Außenrückblickspiegel nach einem der vorhergehenden Ansprüche, **dadurch gekennzeichnet, dass**
sich die zumindest eine Partie des Wiederholblinkleuchtenmoduls (5) zumindest zwischen dem ersten Gehäuseteil (03) und dem zweiten Gehäuseteil (04) des Außenrückblickspiegelgehäuses (02) erstreckt, wobei zwischen Wiederholblinkleuchtenmodul (05) und erstem Gehäuseteil (03) wenigstens eine erste Verbindungsstelle (41) mit mindestens einer ersten Verbindungsart und zwischen Wiederholblinkleuchtenmodul (05) und zweitem Gehäuseteil (04) wenigstens eine zweite Verbindungsstelle (42) mit mindestens einer zweiten Verbindungsart vorgesehen ist, von denen zumindest eine Verbindungsart eine Rastverbindung (43) umfasst.

7. Außenrückblickspiegel nach einem der vorhergehenden Ansprüche, **dadurch gekennzeichnet, dass**
das erste Gehäuseteil (03) oder das zweite Gehäuseteil (04) eine um eine Öffnung für das Spiegelglas herumliegende Gehäusepartie mit die Öffnung umgebenden Wandungen umfasst.

## Claims

1. An external rear view mirror (01) for a motor vehicle with an external-rear-view-mirror housing (02), said housing (02) having at least two parts and having an opening for a mirror glass and accommodating at least one base support (08), wherein the external-rear-view-mirror housing (02) at least consists of a first housing part (03) and a second housing part (04), said housing parts being connected to each other and each of said housing parts being connected to the base support (08), wherein
snap-in connections (09, 10, 11) are provided at least both between the first housing part (03) and the second housing part (04) and between each of the housing parts (03, 04) and the base support (08), wherein at least all junctions (12) between the housing parts (03, 04) as well as between the housing parts (03, 04) and the base support (08) each comprise at least one snap-in connection (09, 10, 11), **characterized in that** the two housing parts (03, 04) are connected to each other across a turn signal repeater module (05), which is at least partially accommodated in the external-rear-view-mirror housing (02) with at least one section that is provided for performing a turn signal repeating function and comprises at least one light exit surface (06), and that the mirror glass is adjustably arranged on the base body (8).

2. The external rear view mirror according to claim 1, **characterized in that** at least one junction (12) between the housing parts (03, 04) and/or between the housing parts (03, 04) and the base support (08) is exclusively established by at least one snap-in connection (09, 10, 11).

3. The external rear view mirror according to claim 1 or 2, **characterized in that** at least one selected junction (12) between the housing parts (03, 04) and/or between the housing parts (03, 04) and the base support (08) has a further connection type (13) in addition to the snap-in connection (09, 10, 11).

4. The external rear view mirror according to any one of the preceding claims, **characterized in that**
at least one snap-in connection (09, 10, 11) acting between the housing parts (03, 04) and/or one housing part (03, 04) and the base support (08) has at least one contact surface (20, 38; 29, 31; 32, 34) aligning the housing parts (03, 04) to be connected to each other with each other and/or the housing part (03, 04) and the base support (08) with each other.

5. The external rear view mirror according to any one of the preceding claims, **characterized in that**
at least one housing part (03, 04) and/or the base support (08) has at least one contact surface (54, 39, 40, 55) aligning the housing parts (03, 04) to be connected to each other with each other and/or one housing part (03, 04) and the base support (08) with each other and cooperating with an adjacent housing part (04, 03) or the base support (08).

6. The external rear view mirror according to any one of the preceding claims, **characterized in that**
the at least one section of the turn signal repeater module (05) extends at least between the first housing part (03) and the second housing part (04) of the external-rear-view-mirror housing (02), wherein at least one first junction (41) with at least one first connection type is provided between the turn signal repeater module (05) and the first housing part (03) and at least one second junction (42) with at least one second connection type is provided between the turn signal repeater module (05) and the second housing part (04), at least one connection type of said connection types comprising a snap-in connection (43).

7. The external rear view mirror according to any one of the preceding claims, **characterized in that**
the first housing part (03) or the second housing part (04) comprises a housing section surrounding an opening for the mirror glass, said housing section having walls surrounding the opening.

## Revendications

1. Rétroviseur extérieur (01) pour une automobile avec un boîtier de rétroviseur extérieur (02) au moins en deux parties, qui présente une ouverture pour une glace et accueille au moins un support de base (08), le boîtier de rétroviseur extérieur (02) étant constitué d'au moins une première partie de boîtier (03) et une seconde partie de boîtier (04), qui sont reliées aussi bien entre elles qu'également respectivement avec le support de base (08), où
des liaisons par encliquetage (09, 10, 11) sont fournies au moins aussi bien entre la première partie de boîtier (03) et la seconde partie de boîtier (04) ensemble que respectivement aussi entre les parties de boîtier (03, 04) et le support de base (08), et comprennent au moins tous les points de liaison (12) entre les parties de boîtier (03, 04) ensemble, ainsi que respectivement aussi au moins une liaison par encliquetage (09, 10, 11) entre les parties de boîtier (03, 04) et le support de base (08), **caractérisé en ce que**
les deux parties de boîtier (03, 04) sont reliées entre elles par l'intermédiaire d'un module de clignotant (05), qui est mis en place au moins partiellement dans le boîtier de rétroviseur extérieur (02) avec au moins une partie comprenant au moins un plan de sortie de lumière (06) prévue pour assurer une fonction de clignotant, et la glace est agencée orientable sur le corps de base (08).

2. Rétroviseur extérieur selon la revendication 1, **caractérisé en ce que**
au moins un point de liaison (12) est réalisé entre les parties de boîtier (03, 04) ensemble et/ou entre les parties de boîtier (03, 04) et le support de base (08) exclusivement grâce à au moins une liaison par encliquetage (09, 10, 11).

3. Rétroviseur extérieur selon la revendication 1, ou 2, **caractérisé en ce que**
au moins un point de liaison (12) sélectionné présente un autre type de liaison (13) venant en supplément de la liaison par encliquetage (09, 10, 11) entre les parties de boîtier (03, 04) ensemble et/ou entre les parties de boîtier (03, 04) et le support de base (08).

4. Rétroviseur extérieur selon l'une quelconque des revendications précédentes,
**caractérisé en ce que**
au moins une liaison par encliquetage (09, 10, 11) agissant entre les parties de boîtier (03, 04) et/ou entre une partie de boîtier (03, 04) et le support de base (08) présente au moins une surface d'installation (20, 38 ; 29, 31 ; 32, 34) orientant les uns par rapport aux autres les parties de boîtier (03, 04) à relier ensemble et/ou la partie de boîtier (03, 04) et le support de base (08) à relier ensemble.

5. Rétroviseur extérieur selon l'une quelconque des revendications précédentes,
**caractérisé en ce que**
au moins une partie de boîtier (03, 04) et/ou le support de base (08) présente au moins une surface d'installation (54, 39, 40, 55) orientant les uns par rapport aux autres les parties de boîtier (03, 04) à relier ensemble et/ou une partie de boîtier (03, 04) et le support de base (08) à relier ensemble, et collaborant avec une partie de boîtier (04, 03) adjacente ou le support de base (08).

6. Rétroviseur extérieur selon l'une quelconque des revendications précédentes,
**caractérisé en ce que**
la au moins une partie du module de clignotant (5) s'étend au moins entre la première partie de boîtier (03) et la seconde partie de boîtier (04) du boîtier de rétroviseur extérieur (02), au moins un premier point de liaison (41) avec au moins un premier type de liaison étant prévu entre le module de clignotant (05) et la première partie de boîtier (03) et au moins un second point de liaison (42) avec au moins un seconde type de liaison étant prévu entre le module de clignotant (05) et la seconde partie de boîtier (04), parmi lesquels au moins un type de liaison comprend une liaison par encliquetage (43).

7. Rétroviseur extérieur selon l'une quelconque des revendications précédentes,
**caractérisé en ce que**
la première partie de boîtier (03) ou la seconde partie de boîtier (04) comprend une partie de boîtier se trouvant autour d'une ouverture pour la glace avec des parois entourant l'ouverture.
